# EUROPEAN PATENT APPLICATION

(11) **EP 1 932 438 A1**
(43) Date of publication of application: **18.06.2008**
(21) Application number: 07106314.3
(22) Date of filing: 17.04.2007
(51) Int. Cl.: A23L 2/02, A23L 2/52, A23L 2/68

(54) **Beverage**

(30) Priority: 12.12.2006 SK 1642006
(71) Applicant: Vitis Pezinok, s.r.o., 90201 Pezinok (SK)
(72) Inventor: Guzelova, Zuzana, 90301, Pezinok (SK); Polkorab, Richard, 90201, Pezinok (SK)
(74) Representative: Belicka, Ivan

(57) **Abstract**

Beverage on the base of grape must, the characteristics of which is that it comprises from concentrated grape must, plant macerate of Sambucus nigra, citric acid, tartaric acid and other additives. The very beverage is obtained by mixing of the syrup and drinking water (carbonated or non-carbonated by carbon dioxide) in a ratio 1 : 9 to 4: 6, whereas a non-alcoholic beverage is created with the refractometric determination of dry matter of 6 to 20 % and total acids 3 to 5 g/l. It is then pasteurized in flow pasteurization equipment.

## Description

Technical Field

The patent refers to a beverage on the basis of grape must.

### Disclosure of Invention

There are several types of non-alcoholic beverages on the basis of grape must on the market. Among the known products is the trade mark Vinea made of grape must with the taste of grapes. It acquired the attribute of non-alcoholic wine thanks to its pleasant muscat aroma and delicate taste. It has a high dose of fruit sugars, organic acids, minerals, natural aromatic substances, and a series of vitamins important for healthy diet. Vinea is made of grape must without colour additives. Pressed grape juice contains a high dose of fruit sugars, organic acids, minerals, natural aromatic substances, and a whole series of vitamin B.

Another known beverage has the trade mark Top Topic. It is a mildly carbonated grape beverage on a natural basis with pure grape juice content of 7, 5%. It is produced with two wine flavours, white version with Chardonnay flavour and red version with the flavour of Cabernet Sauvignon. FIT version is without any added sugar, it contains only grape juice sugars.

The third known beverage has the trade mark Marka. It has similar taste and colour as the two above mentioned beverages.

Next non-alcoholic beverage on the basis of grape must is described in the utility model 4221. This one is made of syrup comprising from 70 wt% concentrated grape must, from 5 - 20 wt % sucrose, from 1 to 5 wt % macerate or juniper distillate, from 1 wt % macerate or herb distillate of coriander, angelica, calamus, iris, anise, or orange skin, eventually both units of created macerate or distillate, from 1 wt % citric acid, from 0,3 wt % acetic acid, from 0,3 wt% phosphoric acid, form 0,002 wt % octa-acetyl-sucrose, whereas the produced syrup is homogenized with water in a ratio of 1:5 and carbonated by CO₂, while the final refractometric determination of dry matter are 9 to 14 °Rf and acid contents are 4 to 5 g.l⁻¹.

Majority of the mentioned beverages contains preserving agents, for example Potassium Sorbate.

**The Patent features**

Disadvantages of the current conditions are partially resolved by the non-alcoholic grape beverage on the base of grape must, the basis of which is made of syrup comprising from 80% to 95 wt % concentrated grape must, from 1 to 18 wt % plant macerate of Sambucus nigra, from 0, 1 to 1 wt % citric acid, from 0,1 to 1 wt % tartaric acid, the remainder of maximum 0,004 wt % is made of ascorbic acid and tannin in a ratio 1 : 0 to 10: 1.

The allocated level of the refractometric determination of dry matter in the produced syrup should be at the minimum of 45% Rf with the aberrance ± 0,5 % Rf and the final acid contents in the interval 20 - 25 g/I. The produced syrup is desulphurized in a scrubber so that the rate of sulphur dioxide drops under the rate of 100 mg/I, afterwards, components that are fully homogenized in a mixer are added and consecutively filtered. Thus prepared syrup is mixed with drinking water, which is first deaerated in carbonation equipment and afterwards can be carbonated by carbon dioxide. Mixing of the syrup with drinking water (carbonated or non-carbonated by carbon dioxide) is executed in a ratio of 1:9 to 4:6, thus a non-alcoholic beverage is created with the refractometric determination of dry matter 6 to 20%, acid content 3 to 5 g/l, that is consecutively pasteurized in a flow pasteurizing device.

The advantage of the presented patent is its production on the basis of natural grape must with unique flavour, high nutritional value and agents strengthening the organism without further preserving agents.

**Examples of execution**

Example no. 1

The beverage, the basis of which is made up of grape must is prepared from a syrup that comprises from 94 wt % concentrated grape must, from 5 wt % plant macerate of Sambucus nigra, that is prepared from the plant's flower, water, refined sugar, citric acid and leaven of pure yeast culture, whereas this mixture is thoroughly mixed and is left to leaven 5 to 15 days, afterwards it is leached and filtered. It further comprises from 0,6 wt % citric acid, from 0,396 wt % tartaric acid, the remainder of maximum 0,004 wt % is made of ascorbic acid and tannin in a ratio 10:1. The syrup is mixed with drinking water in a ratio 15 - 85, whereas the water is first deaerated in carbonation equipment and afterwards is carbonated by carbon dioxide in a ratio 38 weight units of water and one weight unit of carbon dioxide.

During the water carbonation and its mixing with syrup, the lowest possible temperature is maintained, afterwards, the carbonated mixture is transferred into a flow pasteurizing device where it is pasteurized by the temperature of 80 - 90 °C for the duration of 20 to 60 seconds. The pasteurized beverage is then transferred into a filling device.

A beverage obtained in this way has the refractometric determination of dry matter at the minimum of 8,5 % and total acids of 3,5 to 4,5 g/l.

Example no. 2

The beverage, the basis of which is made up of grape must is prepared from a syrup that comprises from 90 wt % concentrated grape must, from 9 wt % macerate of the plant Sambucus nigra, that is prepared from the plant's flower, water, refined sugar, citric acid and leaven of pure yeast culture, whereas this mixture is thoroughly mixed and is left to leaven 5 to 15 days, afterwards it is leached and filtered. It further comprises from 0,6wt % citric acid, from 0,396 wt % tartaric acid and the remainder of maximum 0,004 wt% is made of ascorbic acid. The syrup is mixed with drinking water in a ratio 18 - 82, whereas the water is first deaerated in carbonation equipment and afterwards is carbonated by carbon dioxide in a ratio 40 weight units of water and one weight unit of carbon dioxide.

During the water carbonation and its mixing with syrup, the lowest possible temperature is maintained, afterwards, the carbonated mixture is transferred into a flow pasteurizing device where it is pasteurized by the temperature of 80 - 90 °C for the duration of 20 to 60 seconds. The pasteurized beverage is then transferred into a filling device.

A beverage obtained in such a way has the refractometric determination of dry matter at the minimum of 8,5 % and total acids of 3,5 to 4,5 g/l.

Example no. 3

The beverage, the basis of which is made up of grape must is prepared from a syrup that comprises from 90 wt % concentrated grape must, from 9 wt % plant macerate of Sambucus nigra, that is prepared from the plant's flower, water, refined sugar, citric acid and leaven of pure yeast culture, whereas this mixture is thoroughly mixed and is left to leaven 5 to 15 days, afterwards it is leached and filtered. It further comprises from 0,6 wt % citric acid, from 0,396 wt % tartaric acid and the remainder of maximum 0,004 wt% is made of ascorbic acid. The syrup is mixed with deaerated drinking water in a ratio 30 : 70. During the water carbonation and its mixing with syrup, the lowest possible temperature is maintained, afterwards, the carbonated mixture is transferred into a flow pasteurizing device where it is pasteurized by the temperature of 80 - 90 °C for the duration of 20 to 60 seconds. The pasteurized beverage is then transferred into a filling device.

A beverage obtained in such a way has the refractometric determination of dry matter at the minimum of 12 % and total acids of 3,5 to 4,5 g/l.

### Industrial Application

Non-alcoholic beverages on the basis of grape must, according to the patent, have wide scope in the food industry due to their unique taste and aroma, high nutritional value and quality, as well as sufficient stock of domestic raw materials.

## Claims

1. A beverage, the basis of which is made of grape must, is **characteristic by the fact that** it is created by a syrup that comprises from 80 to 95 wt % concentrated grape must, from1 to 18 wt % plant macerate of Sambucus nigra, from 0,1 to 1 wt % citric acid, and the remainder of maximum 0,004 wt% is made of ascorbic acid and tannin in a ratio 1 : 0 to 10 : 1, whereas the created syrup is mixed with deaerated drinking water in a ratio 1 : 9 to 4 : 6 weight units, while the refractometric determination of dry matter is 6 to 20 % and total acids are at 3,5 to 4,5 g/l.

2. The beverage according to claim 1 is characteristic by the fact that deaerated drinking water is carbonated by carbon dioxide in a ratio 30 to 40 weight units of water and one weight unit of carbon dioxide.
